# EUROPÄISCHE PATENTSCHRIFT

(11) **EP 1 735 656 B1**
(45) Veröffentlichungstag und Bekanntmachung des Hinweises auf die Patenterteilung: **16.09.2009**
(21) Anmeldenummer: 05726526.6
(22) Anmeldetag: 31.03.2005
(51) Int. Cl.: G02B 27/01, B60K 35/00, G09F 9/33

(54) **EINBAU-KOMBINATIONSINSTRUMENT**
BUILT-IN COMBINATION INSTRUMENT
INSTRUMENT MIXTE INTEGRE

(30) Priorität: 05.04.2004 DE 102004017249; 17.03.2005 DE 102005012848
(43) Veröffentlichungstag der Anmeldung: 27.12.2006
(73) Patentinhaber: Volkswagen Aktiengesellschaft, 38436 Wolfsburg (DE)
(72) Erfinder: KIESEWETTER, Thomas, 38118 Braunschweig (DE); VAZ, Paolo, 38465 Brome (DE); MEYER, Niclas, 38102 Braunschweig (DE); HOFMANN, Gustav, 38114 Braunschweig (DE); NEUNER, Helge, 38300 Wolfenbüttel (DE); HOFMANN, Robert, 10777 Berlin (DE); WENZEL, Ralf, 38527 Meine (DE)
(74) Vertreter: Meyer, Enno
(86) Internationale Anmeldenummer: PCT/EP2005/003404
(87) Internationale Veröffentlichungsnummer: WO 2005/098513

(56) Entgegenhaltungen:
- EP-A- 0 945 710
- EP-A- 1 079 209
- WO-A-03/102667
- DE-A1- 10 154 227
- US-A- 4 636 782
- US-A1- 2003 090 886
- US-B1- 6 317 037

## Beschreibung

Die Erfindung betrifft ein Einbau-Kombinationsinstrument für ein Kraftfahrzeug mit mindestens einer Displayeinrichtung, welche abbildendes Licht abgibt, und mindestens einer beleuchteten oder selbstleuchtenden elektromechanischen Anzeigeeinheit.

Die Vielfalt von Information, die einem Fahrzeugführer aufgrund der steigenden Anzahl von Komforteinrichtungen, wie beispielsweise etwa Navigationseinrichtungen, Telekommunikationseinrichtungen, Fahrerassistenzsystemen und Warnhinweisen und dergleichen, angezeigt wird, steigt ständig. In zahlreichen Fahrzeugen werden deshalb schon sogenannte Multifunktions-Bedieneinrichtungen eingesetzt, die insbesondere in der Mitte der Konsole angeordnet sind. Der Fahrer ist bei dieser Anordnung von Informationsvermittlung gezwungen, seinen Blick vom Fahrgeschehen abzuwenden. Aus diesem Grund ist es bevorzugt, zumindest einen Teil der Information in den in Fahrtrichtung im Blickfeld des Fahrzeugführers befindlichen Kombinationsinstrument anzuzeigen. Hier entsteht das Problem, dass nur eine bestimmte Anzeigefläche im Kombinationsinstrument zusätzlich zu analogen Anzeigeelementen für Geschwindigkeit, Drehzahl und dergleichen zur Verfügung steht.

Aus diesem Grund wird an neuen Konzepten für Kombinationsinstrumente gearbeitet, die eine größere Vielfalt von Information wiedergeben können, ohne auf herkömmliche analoge Anzeigeinstrumente zu verzichten.

Beispielsweise aus der EP 482 805 B1 ist ein Kombinationsinstrument bekannt, bei dem eine erste und eine zweite Bildquelle vorgesehen sind. Eine abbildende Beleuchtung der ersten Bildquelle wird von einer planaren Kombinationseinrichtung und zwei weiteren im Strahlengang des reflektierten Lichts befindlichen Spiegeln zum Beobachter reflektiert.

Die abbildende Beleuchtung der zweiten Bildquelle wird dabei von der Kombinationseinrichtung durchgelassen und dann ebenfalls von den beiden Spiegeln zum Beobachter reflektiert. Dabei kann die erste Bildquelle eine Gruppe von elektromechanischen Anzeigeeinrichtungen, beispielsweise für die Geschwindigkeit, den Öldruck, das Tankniveau und Anzeigetafellichter, wie etwa Fahrtrichtungsanzeiger, Fernlicht- und Notfallanzeigen, aufweisen. Die zweite Bildquelle ist als Flüssigkristallanzeige realisiert, um alphanumerische Information, wie Nachrichten, Wartungsanweisungen und Einstellungen für die Umgebung, bereitzustellen. Bei diesem bekannten Kombinationsinstrument befindet sich keine der beiden Bildquellen im direkten Blickfeld des Fahrzeugführers, so dass ein rein virtuelles Bild entsteht. Außerdem ist es bei diesem Kombinationsinstrument schwierig, die durch die unterschiedlich angeordneten Bildquellen und die mehrfachen Reflexionen des abbildenden Lichts der Bildquellen entstehenden Parallaxen in den Griff zu bekommen, um Bildverzerrungen zu vermeiden.

Die JP 2002079848 A offenbart ein Kombinationsinstrument für ein Kraftfahrzeug mit einer herkömmlichen elektromechanischen Anzeigeeinrichtung, in deren Anzeigebild über einen konkaven, semitransparenten Spiegel, der für das abbildende Licht der elektromechanischen Anzeigeeinrichtung durchlässig ausgebildet ist, ein virtuelles Bild, einer nicht im Blickfeld des Fahrzeugführers angeordneten Displayeinrichtung hinein reflektiert wird. Mit Hilfe dieser Anzeigeeinrichtung ist es jedoch nicht möglich, das Problem herkömmlicher Anzeigeeinrichtungen zu überwinden, nämlich eine größere Vielfalt unterschiedlicher Information für den Fahrzeugführer rasch erfassbar darzustellen, da in der elektromechanischen Anzeigeeinrichtung Raum für das reflektierte Bild der Displayeinrichtung bereitgehalten werden muss.

Dieses Problem wird durch einen Vorschlag der Anmelderin in Bezug auf ein Kombinationsinstrument für ein Kraftfahrzeug überwunden. Gemäß diesem Vorschlag ist die Displayeinrichtung, die als Flüssigkristallanzeige, OLED-Anzeige oder eine beliebige andere Anzeige dieser Art verwirklicht sein kann, im Blickfeld des Betrachters angeordnet. Eine weitere elektromechanische Anzeigeeinrichtung ist in einem Winkel zu der Displayeinrichtung außerhalb des Blickfelds des Fahrzeugführers angeordnet. Zwischen der Displayeinrichtung und der elektromechanischen Anzeigeeinrichtung befindet sich eine optische Kombinationseinrichtung, um das abbildende Licht der Displayeinrichtung und der elektromechanischen Anzeigeeinrichtung zu einem gemeinsamen Anzeigebild zusammen zu fügen. Die Kombinationseinrichtung für das abbildende Licht der Displayeinrichtung ist durchlässig gebildet und außerdem derart ausgebildet, dass sie das abbildende Licht der elektromechanischen Anzeigeeinrichtung reflektiert. Durch diese Maßnahmen kann eine größere Vielfalt an Information in unterschiedlichen Anzeigemodi für ein Kraftfahrzeug übersichtlich dargestellt werden. Aufgrund der Anordnung der elektromechanischen Anzeigeeinrichtung unter dem Blickfeld des Betrachters ist für dieses Kombinationsinstrument zusätzlicher Bauraum an einer Stelle innerhalb des Armaturenbretts erforderlich, wobei bisher für Kombinationsinstrumente kein Bauraum erforderlich gewesen ist. Es besteht deshalb ein Bedarf darin, das im Oberbegriff des Anspruchs 1 angegebene Kombinationsinstrument so weiter zu bilden, dass es in dem beschränkten Bauraum eines Armaturenbretts untergebracht werden kann.

Eine Aufgabe der Erfindung besteht deshalb darin, ein Einbau-Kombinationsinstrument zu schaften, dass trotz Verwendung von Displayeinrichtung und mechanischer Anzeigeeinrichtung so kompakt ist, dass es in dem beschränkten Raum eines Armaturenbretts im Bereich der Lenksäule eingebaut werden kann.

US 6 317 037 A offenbart ein Einbau-Kombinationsinstrument für ein Kraftfahrzeug, mit mindestens einer Displayeinrichtung, welche abbildendes Licht abgibt und im unmittelbaren Blickfeld eines Betrachters angeordnet ist, und mit mindestens einer beleuchteten und/oder selbstleuchtenden elektromechanischen Anzeigeeinrichtung, welche unter einem Winkel zu der Displayeinrichtung in dem Blickfeld des Betrachters angeordnet ist und über eine für das abzubildende Licht der elektromechanischen Anzeigeeinrichtung reflektierend ausgebildete optische Kombinationseinrichtung zusammen mit der Displayeinrichtung in das Blickfeld des Betrachters gerückt wird, wobei die elektromechanische Anzeigeeinrichtung zur Einsparung von Bautiefe zugunsten an die elektromechanische Anzeigeeinrichtung angrenzende Kraftfahrzeugbestandteile zumindest teilweise Lichtleiter und/oder Lichtprojektoren aufweiset.

Gelöst wird diese Aufgabe durch ein Einbau-Kombinationsinstrument mit den Merkmalen des Anspruchs 1. Vorteilhafte Weiterbildungen der Erfindung sind Gegenstand der Unteransprüche.

Demnach weist die elektromechanische Anzeigeeinrichtung zur Einsparung von Bautiefe zugunsten von an die Anzeigevorrichtung angrenzenden Kraftfahrzeugbestandteilen zumindest teilweise Lichtleiter und/oder Lichtprojektoren auf. Dabei weist die Anzeigevorrichtung zumindest ein Zeigerinstrument auf. Je nach Positionierung des Zeigerinstruments innerhalb des Einbau-Kombinationsinstruments können unterschiedliche Bereiche des Zeigerinstruments mit Lichtleitern realisiert sein.

Bevorzugt sind die Anzeigeelemente des Zeigerinstruments, d.h., dessen Zeiger und Anzeigemarkierungen, mit Lichtleitern realisiert. Gemäß einer besonders vorteilhaften Weiterbildung der Erfindung ist auch der Ringrand des Zeigerinstruments mit Lichtleitern realisiert. Besonders effektiv im Hinblick auf Bautiefen-Einsparung ist es, wenn die Lichtquelle zum Einspeisen von Licht in die Lichtleiter LEDs umfasst.

In einer weiteren Ausführungsform sind die Anzeigeelemente des Zeigerinstruments zumindest teilweise mit Lichtprojektoren realisiert. Dabei können insbesondere die graphischen Symbole einer Abdeckscheibe des Zeigerinstruments, d.h. das Zifferblatt, mit Lichtprojektoren erzeugt werden. Vorzugsweise weist ein Lichtprojektor eine LED und ein reflektierendes Element auf, wobei besonders bevorzugt das reflektierende Element zwei Reflektoren umfasst. Die Reflektoren können beispielsweise optische Abbildungseigenschaften aufweisen, beispielsweise als Hohlspiegel ausgebildet sein, um eine optische Abbildung zu erreichen.

Die LEDs zur Einspeisung von Licht in die Lichtleiter oder zum Betrieb des Lichtprojektors sind bevorzugt auf einer Platine unter dem Ziffernblatt des Zeigerinstruments angeordnet. Ein derartiger Verbund aus LEDs und Platine ist insgesamt weniger tiefbauend als herkömmliche Lichtquellen.

Problematisch ist der Einbau des in Rede stehenden Kombinationsinstruments in das Armaturenbrett eines Kraftfahrzeugs aufgrund des sich auf der Rückseite des Kombinationsinstruments anschließenden Schalttafel-Querträgers, der Lenksäulenanbindung im Bereich des vorderen Rands dieses Trägers und der Lenksäule selbst. Ein spezielles Problem stellt dabei nicht die Displayeinrichtung dar, die unmittelbar angrenzend an Schalttafel-Querträger angeordnet werden kann, sondern die liegende und im wesentlichen herkömmlich aufgebaute elektromechanische Anzeigeeinrichtung. Besonders problematisch hierbei ist, dass der Abstand des Einbau-Kombinationsinstruments von der Lenksäulenanbindung und dem eigentlichen Lenkrad so kurz wie möglich sein sollte, um Resonanzfrequenzen zu vermeiden. Dies steht im Konflikt mit der weiteren Anforderung, dass das Kombinationsinstrument eine bestimmte Bautiefe benötigt, um das Zeigerinstrument der elektromechanischen Anzeigeeinrichtung verwirklichen zu können und ein in Bezug auf Design und Ergonomie gutes reflektiertes Bild zu gewährleisten. Das reflektierte Zeigerinstrument sollte dabei optisch vor der Displayeinrichtung gewissermaßen schweben, muss also einen bestimmten Abstand zu dieser Displayeinrichtung aufweisen. Dieser Abstand impliziert eine geringere Bautiefe der elektromechanischen Anzeigeeinrichtung zusätzlich zu dem verringerten Einbauraum aufgrund der Lenksäulenanbindung.

Daher kommt der mit Lichtleitern realisierte Teil des Zeigerinstruments in einem zur Displayeinrichtung weisenden Umfangsrandbereich des Zeigerinstruments zu liegen, um dort zugunsten der Lenksäulenanbindung und aufgrund des benötigten Abstands zu der Displayeinrichtung Bautiefe einzusparen. Durch diese Maßnahme vermag sich das Einbau-Kombinationsinstrument gewissermaßen an die Lenksäulenanbindung anzuschmiegen.

Weiterhin umfasst die elektromechanische Anzeigeeinrichtung zwei beiderseits einer Lenksäule liegende Zeigerinstrumente. Aufgrund dieser zugunsten der Ergonomie günstigen Instrumentenlage und der beschränkt zur Verfügung stehenden Einbaubreite ist es nur in beschränktem Umfang möglich, die beiden Instrumente seitlich so weit beabstandet anzuordnen, dass es nicht zu einem störenden Eingriff mit der Lenksäule kommt. Die Zeigerinstrumente werden so weit an die Lenksäule angenähert, dass die beiden Zeigerinstrumente die Lenksäule im Umfangsrandbereich zumindest teilweise übergreifen. Im Bereich dieser Umfangsrandbereiche sind die Zeigerinstrumente in erfindungsgemäßer Weise mit Lichtleitern realisiert, um dort Bautiefe zugunsten der Lenksäule einzusparen.

Aufgrund der Einspiegelung durch die elektromechanische Anzeigeeinrichtung, die außerhalb des Blickfelds des Betrachters angeordnet ist, mit Hilfe der Kombinationseinrichtung sowie Darstellung der Displayeinrichtung über die Kombinationseinrichtung sollte der Winkel zwischen der Kombinationseinrichtung und der Displayeinrichtung sowie der Kombinationseinrichtung und der elektromechanischen Anzeigeeinrichtung möglichst in etwa gleich groß sein. Bevorzugt betragen diese Winkel jeweils 40°, also zusammen 80°. Um im Hinblick hierauf sowie im Hinblick darauf, dass eine Lenksäulenneigung von mindestens 20°, insbesondere 21 bis 25° und vorzugsweise 23,5° realisiert werden sollte, ist gemäß einer vorteilhaften Weiterbildung der Erfindung vorgesehen, die Displayeinrichtung und die elektromechanische Anzeigeeinrichtung mit Hilfe einer Dreh- und/oder Kippverstelleinrichtung in die gewünschte Orientierung zu bringen.

Die Erfindung wird nachfolgend anhand der Zeichnung beispielhaft näher erläutert; in dieser zeigen:
- Fig. 1: im Querschnitt schematisch den Aufbau des erfindungsgemäßen Einbau-Kombinationsinstruments,
- Fig. 2: eine Querschnittsansicht der Kombinationsanzeigenvorrichtung von Fig. 1 im Bereich der Lenksäule in ein Armaturenbrett eingebaut,
- Fig. 3: schematisch die Anordnung der zwei Zeigerinstrumente umfassenden elektromechanischen Anzeigeeinrichtung des erfindungsgemäßen Kombinationsinstruments in Bezug auf die Lenksäule eines Kraftfahrzeugs, und
- Fig. 4: schematisch einer weitere Möglichkeit der Beleuchtung der Skalen bzw. Ziffernblätter mittels Lichtprojektoren.

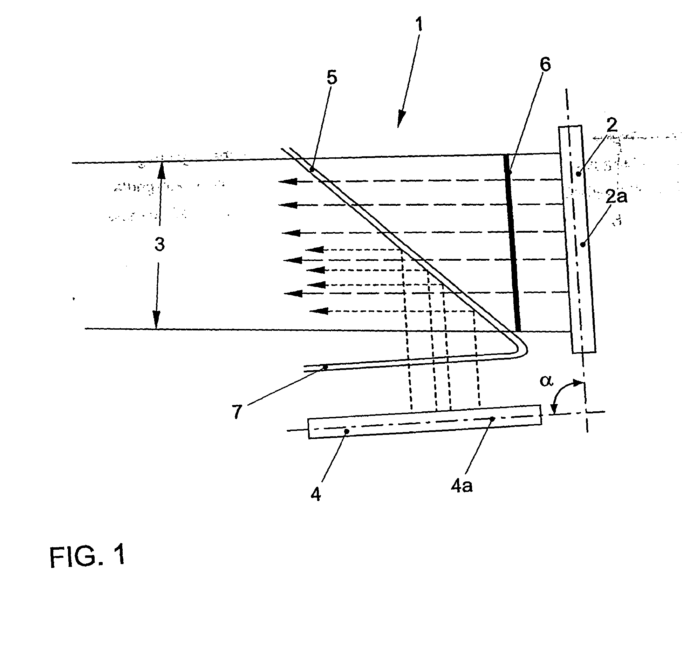

Das in Fig. 1 gezeigte Kombinationsinstrument 1 für ein Kraftfahrzeug besteht im wesentlichen aus einer Displayeinrichtung 2, die sich im unmittelbaren Blickfeld 3 eines Fahrzeugführers im Bereich eines nicht dargestellten Lenkrads befindet, wenn dieser das Kraftfahrzeug führt, und einer elektromechanischen Anzeigeeinrichtung 4, die unterhalb des Blickfelds 3 des Fahrzeugführers zu liegen kommt. Die elektromechanische Anzeigeeinrichtung 4 umfasst mehrere Zeigerinstrumente, insbesondere als Rundinstrumente, deren Skalen bzw. Ziffernblätter selbstleuchtend oder beleuchtend ausgeführt sind, und bevorzugt einen leuchtenden oder selbstleuchtenden Zeiger zur Kenntlichmachung des aktuellen Werts aufweisen. Außerdem kann die elektromechanische Anzeigeeinrichtung 4 ein oder mehrere Leuchtflächenanzeigen für Wamanzeigen, Wamleuchten oder dergleichen aufweisen.

Die Mittenachse 2a und 4a der Displayeinrichtung 2 und der elektromechanischen Anzeigeeinrichtung 4 sind vorteilhafterweise unter einem Winkel α von 80° zueinander angeordnet. In einem Winkel von 45° von der Anzeigeeinrichtung befindet sich eine Kombinationseinrichtung 5. Im Ausführungsbeispiel handelt es sich hierbei um einen planaren, semitransparenten Spiegel, der für das abbildende Licht der Displayeinrichtung 2 durchlässig ausgebildet ist, so dass ein Betrachter das Anzeigelicht der Displayeinrichtung 2 direkt wahrnehmen kann. Das abbildende Licht der elektromechanischen Anzeigeeinrichtung 4 wird von dem semitransparenten Spiegel 5 so reflektiert, dass für den Betrachter das Anzeigebild der Displayeinrichtung 2 als virtuelles Bild 6 vorgelagert erscheint. Im Ausführungsbeispiel ist oberhalb der elektromechanischen Anzeigeeinrichtung 4 eine Blende 7 aus semitransparentem Material vorgesehen, die für das abbildende Licht der Anzeigeeinrichtung durchlässig ausgebildet ist, und die elektromechanische Anzeigeeinrichtung 4 für den Betrachter zumindest im ausgeschalteten Zustand abdeckt.

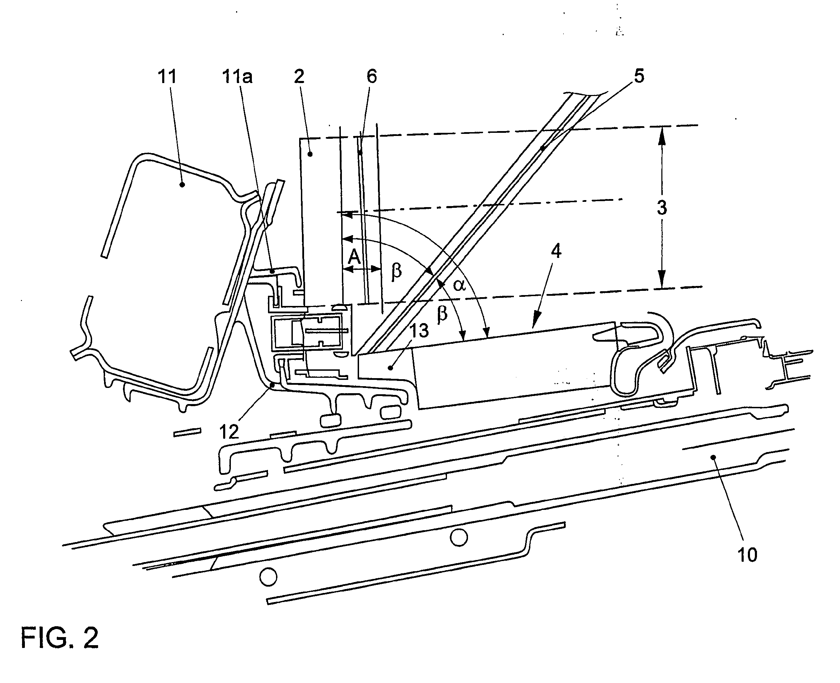

Fig. 2 zeigt im Querschnitt die Anordnung der Hauptbestandteile des Einbau-Kombinationsinstruments von Fig. 1 in Bezug auf Bestandteile des Kraftfahrzeugs im Bereich des Einbauorts über der Lenksäule 10.

Wie aus Fig. 2 hervorgeht, ist der Einbauraum an dieser Stelle hinter dem Armaturenbrett für das Kombinationsinstrument 1 sehr beengt. Hinter dem Einbauort der Displayeinrichtung 2 des Kombinationsinstruments 1 befindet sich ein Schalttafel-Querträger 11 mit einem zur Displayeinrichtung 2 vorspringenden Trägerprofilelement 11a. Da an der Stelle der Displayeinrichtung 2 herkömmlicherweise auch das konventionelle Kombinationsinstrument zu liegen kommt, ist der Platzbedarf für die Displayeinrichtung 2 in Bezug auf den Schalttafel-Querträger 11 zwar problematisch, aber nicht so kritisch wie die Position der mechanischen Anzeigeeinrichtung 4 in Bezug auf die Lenksäule 10 und die mit der Lenksäule 10 zusammenwirkenden Bauteile. Hier ist insbesondere die Lenksäulenanbindung 12 zu nennen, die sich ausgehend von der Rückseite der Displayeinrichtung 2, etwa anschließend an das Trägerprofilelement 11a, nach unten und vor allem nach vorn in Bezug auf die Lenksäule 10 erstreckt. Aufgrund der vorstehend im Zusammenhang mit Fig. 1 erläuterten Geometrie bzw. Lage der Displayeinrichtung 2, der Anzeigeeinrichtung 4 und der Kombinationseinrichtung 5 in Bezug aufeinander kommt die Anzeigeeinrichtung 4 so weit unterhalb der Displayeinrichtung 2 zwangsweise zu liegen, dass zumindest für einen zur Displayeinrichtung 2 weisenden Randbereich 13 der Anzeigeeinrichtung 4 angesichts des vorderen Endes der Lenksäulenanbindung 12 nicht genügend Bauraum vorhanden ist. Die Anzeigeeinrichtung 4, die in diesem Bereich beispielsweise ein Rundinstrument bzw. ein Zeigerinstrument enthält, kann dadurch nicht in herkömmlicher Weise mit der erforderlichen Bautiefe realisiert werden, weil in diesem Bereich 13 hierfür kein Platz vorhanden ist. Es ist deshalb erfindungsgemäß vorgesehen, zur Einsparung von Bautiefe zugunsten der Lenksäulenanbindung 12 in besagtem Umfangsrandbereich 13 das dort angeordnete Zeigerinstrument zumindest teilweise aus Lichtleitern oder Lichtprojektoren zu realisieren, die geringe Bautiefe haben und es damit erlauben, dass die Anzeigeeinrichtung 4 im Umfangsrandbereich 13 weniger tief bauen kann als im übrigen Bereich.

Im Hinblick auf den begrenzten Unterbringungsraum für das Kombinationsinstrument 1 wird unter Bezug auf Fig. 2 noch folgendes ausgeführt. Der Abstand des Kombinationsinstruments 1 von der Lenksäulenanbindung 12 und dem eigentlichen, nicht gezeigten Lenkrad sollte so kurz wie möglich sein, um Resonanzfrequenzen zu vermeiden. Andererseits wird eine bestimmte Bautiefe benötigt, um die Zeigerinstrumente der elektromechanischen Anzeigeeinrichtung 4 verwirklichen zu können, um in Bezug auf Design und Ergonomie gutes reflektiertes Abbild dieser Instrumente verwirklichen zu können. Die reflektierten Zeigerinstrumente sollen optisch vor der Displayeinrichtung gewissermaßen schweben, weshalb ein entsprechender Abstand A zwischen der Vorderseite der Displayeinrichtung 2 und der Kante des Umfangsrandbereichs 13 der Anzeigeeinrichtung 4 eingehalten werden muss. An dieser Stelle existiert die vorstehend angesprochene Engstelle zwischen Lenksäulenanbindung 12 und Anzeigeeinrichtung 4, weshalb diese im Umfangsrandbereich 13 weniger tief bauend ausgebildet ist, was mit Hilfe von Lichtleitern oder Lichtprojektoren realisiert werden kann, welche einen Teil der Elemente der Anzeigeeinrichtung 4 bilden.

Außerdem sollte das Kombinationsinstrument 1 so angeordnet werden, dass eine Lenksäulenheigung von mindestens 20°, insbesondere 21° bis 25°, vorzugsweise 23,5°, realisiert werden kann. Der Winkel zwischen dem halbtransparentem Spiegel bzw. der Kombinationseinrichtung 5 und der Displayeinrichtung 2 sowie der Kombinationseinrichtung 5 und der Anzeigeeinrichtung 4 sollten außerdem gleich sein. Bei einem Winkel von jeweils 40° ergibt sich damit insgesamt ein Winkel von 80°. Um das Kombinationsinstrument 1 dementsprechend präzise und problemlos im Armaturenbrett einbauen zu können, ist gemäß einer vorteilhaften Weiterbildung der Erfindung eine gemeinsame Höhenverstellung bzw. Drehverstellung der Displayeinrichtung 2 und der Anzeigeeinrichtung 4 zusammen mit der Kombinationseinrichtung 5 vorgesehen (nicht gezeigt).

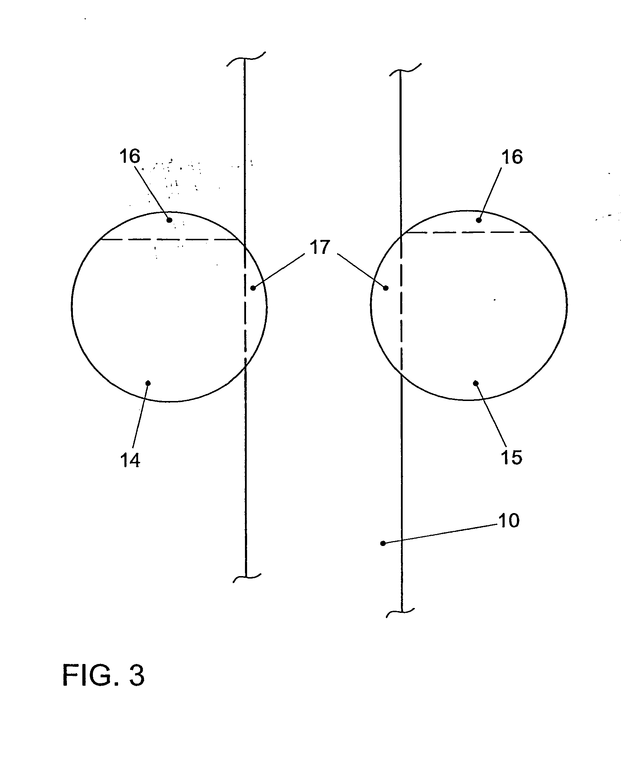

Aus Fig. 3 geht eine erfindungsgemäße Bestückung der elektromechanischen Anzeigeeinrichtung 4 mit zwei Rundinstrumenten bzw. Zeigerinstrumenten 14 und 15 hervor, die in Bezug auf die Lenksäule 10 die aus Fig. 2 hervorgehende Position einnehmen. Da die beiden Zeigerinstrumente 14 und 15 seitlich versetzt zueinander im Kombinationsinstrument 1 zu liegen kommen, und das Kombinationsinstrument 1 nur eine bestimmte Baubreite aufweisen kann, während die Zeigerinstrumente 14 und 15 zur guten Ablesbarkeit mit entsprechend großem Durchmesser ausgebildet sind, kommen die Zeigerinstrumente 14, 15 so zu liegen, dass sie zumindest mit den aufeinander zuweisenden Randbereichen 16 und 17 die Lenksäule 10 überlappen. An dieser Stelle besteht ein ähnlich begrenztes Platzangebot wie im Falle des Umfangrandbereichs 13, so dass in den Bereichen 16 und 17 erfindungsgemäß die Zeigerinstrumente 14, 15 mittels Lichtleitern oder Lichtprojektoren zur Einsparung von Bautiefe zugunsten der Lenksäule 10 ausgebildet sind.

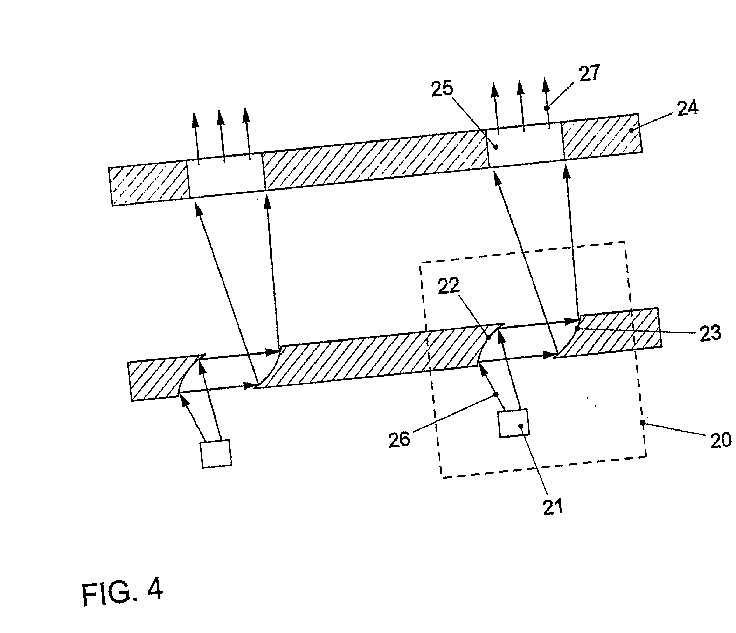

Fig. 4 zeigt in schematischer Darstellung die Verwendung von Lichtprojektoren zur Verringerung der Bautiefe der elektromechanischen Anzeigevorrichtung. Ein Lichtprojektor 20 zur Einsparung von Bautiefe umfasst eine Lichtquelle 21, vorzugsweise eine LED und ein reflektierendes Element bestehend aus zwei gegenüberstehenden Reflektoren 22 und 23, die beispielsweise als Hohlspiegel ausgebildet sind, um eine entsprechende optische Abbildung zu erzielen. Das von der LED 21 ausgestrahlte Licht 26 wird durch das reflektierende Element auf eine mit graphische Symbolen 25 versehene Abdeckscheibe 24, vorzugsweise ein Zifferblatt, abgebildet, so dass das Symbol 25 leuchtet und Licht 27 zum Betrachter (nicht dargestellt) schickt. Das Zifferblatt 24 ist unterhalb des Zeigers der Anzeigevorrichtung, d.h. des Rundinstruments, in bekannter Weise angeordnet.

### BEZUGSZEICHENLISTE

- 1: Kombinationsinstrument
- 2: Displayeinrichtung
- 2a: Mittenachse
- 3: Blickfeld
- 4: Anzeigeeinrichtung
- 4a: Mittenachse
- 5: Kombinationseinrichtung
- 6: Virtuelles Bild
- 7: Blende

- 10: Lenksäule
- 11: Schalttafel-Querträger
- 11a: Trägerprofilelement
- 12: Lenksäulenanbindung
- 13: Umfangsrandbereich
- 14: Zeigerinstrument
- 15: Zeigerinstrument
- 16: Umfangsrandbereich
- 17: Umfangsrandbereich

- 20: Lichtprojektor
- 21: LED
- 22: Reflektor
- 23: Reflektor
- 24: Zifferblatt
- 25: Graphisches Symbol
- 26: emitiertes Licht der LED
- 27: Symbollicht

## Patentansprüche

1. Einbau-Kombinationsinstrument für ein Kraftfahrzeug, mit mindestens einer Displayeinrichtung (2), welche abbildendes Licht abgibt und im unmittelbaren Blickfeld eines Betrachters angeordnet ist, und mindestens einer beleuchteten und/oder selbstleuchtenden elektromechanischen Anzeigeinrichtung (4), welche unter einem Winkel zu der Displayeinrichtung (2) in dem Blickfeld des Betrachters angeordnet ist und über eine für das abbildende Licht der elektromechanischen Anzeigeeinrichtung (4) reflektierend ausgebildete optische Kombinationseinrichtung (5) zusammen mit der Displayeinrichtung (2) in das Blickfeld des Betrachters gerückt wird, wobei die elektromechanische Anzeigeeinrichtung (4) zumindest teilweise Lichtleiter und/oder Lichtprojektoren (20) aufweist,
**dadurch gekennzeichnet, dass**
die elektromechanische Anzeigeeinrichtung (4) zwei beiderseits einer Lenksäule (10) liegende Zeigerinstrumente (14, 15) aufweist,
die Zeigerinstrumente (14, 15) zumindest teilweise mit Lichtleiter und/oder Lichtprojektoren realisiert sind, und
der mit Lichtleitern und/oder Lichtprojektoren realisierte Teil (13) des Zeigerinstruments (14, 15) in einem zur Displayeinrichtung (2) weisenden Umfangsrandbereich des Zeigerinstruments (14, 15) vorgesehen ist, um dort zugunsten einer Lenksäulenanbindung (12) Bautiefe einzusparen.

2. Kombinationsinstrument nach Anspruch 1, **dadurch gekennzeichnet, dass** die Anzeigeelemente der Zeigerinstrumente (14, 15) mit Lichtleitern realisiert sind.

3. Kombinationsinstrument nach Anspruch 1, **dadurch gekennzeichnet, dass** die Anzeigeelemente der Zeigerinstrumente (14, 15) mit Lichtprojektoren (20) realisiert sind.

4. Kombinationsinstrument nach Anspruch 3, **dadurch gekennzeichnet, dass** die graphischen Symbole (25) einer Abdeckscheibe (24) der Zeigerinstrumente (14, 15) mit Lichtprojektoren (20) erzeugt werden.

5. Kombinationsinstrument nach einem der vorangegangenen Ansprüche, **dadurch gekennzeichnet, dass** ein Lichtprojektor (20) eine LED (21) und ein reflektierendes Element (22, 23) aufweist.

6. Kombinationsinstrument nach Anspruch 5, **dadurch gekennzeichnet, dass** das reflektierende Element zwei Reflektoren (22, 23) umfasst.

7. Kombinationsinstrument nach einem der vorangegangenen Ansprüche, **dadurch gekennzeichnet, dass** der Ringrand der Zeigerinstrumente (14, 15) mit Lichtleitern realisiert ist.

8. Kombinationsinstrument nach einem der vorangegangenen Ansprüche, **dadurch gekennzeichnet, dass** eine Lichtquelle zum Einspeisen von Licht in die Lichtleiter LEDs umfasst.

9. Kombinationsinstrument nach mindestens einem der Ansprüche 5 und 8, **dadurch gekennzeichnet, dass** die LEDs auf einer Platine der Zeigerinstrumente (14, 15) angeordnet sind.

10. Kombinationsinstrument nach einem der vorangegangenen Ansprüche, **dadurch gekennzeichnet, dass** die beiden Zeigerinstrumente (14, 15) in einem Abstand angeordnet sind, der im wesentlichen dem Durchmesser der Lenksäule entspricht.

11. Kombinationsinstrument nach einem der vorangegangenen Ansprüche, **dadurch gekennzeichnet, dass** bei einem runden Durchmesser der Lenksäule (10) der Abstand der Zeigerinstrumente (14, 15) kleiner als der Durchmesser der Lenksäule (10) ist, wobei die die Lenksäule(10) übergreifende Umfangsrandbereiche (16, 17) der Zeigerinstrumente (14, 15) mit Lichtleitern und/oder Lichtprojektoren (20) realisiert sind, um dort Bautiefe zugunsten der Lenksäule (10) einzusparen.

12. Kombinationsinstrument nach einem der vorangegangenen Ansprüche, **dadurch gekennzeichnet, dass** die optische Kombinationseinrichtung (5) durch einen halbdurchlässigen Spiegel (5) gebildet ist, wobei die Displayeinrichtung (2) in Blickrichtung des Betrachters hinter dem Spiegel (5) und die elektromechanische Anzeigeeinrichtung (4) unterhalb des Spiegels (5) angeordnet sind.

13. Kombinationsinstrument nach einem der vorangegangenen Ansprüche, **dadurch gekennzeichnet, dass** für die Displayeinrichtung (2) und die elektromechanische Anzeigeeinrichtung (4) eine gemeinsame Dreh- und/oder Kippverstelleinrichtung vorgesehen ist.

## Claims

1. Built-in combination instrument for a motor vehicle, having at least one display device (2) which emits imaging light and is arranged in the immediate field of view of a viewer, and having at least one illuminated and/or self-luminous electromechanical indicating device (4) which is arranged at an angle to the display device (2) in the field of view of the viewer and can be moved into the field of view of the viewer via an optical combination device (5), designed to reflect the imaging light of the electromechanical indicating device (4), together with the display device (2), the electromechanical indicating device (4) at least partially having optical conductors and/or light projectors (20), **characterized in that** the electromechanical indicating device (4) has two pointer instruments (14, 15) lying on either side of a steering column (10), the pointer instruments (14, 15) are implemented at least partially by optical conductors and/or light projectors, and the part (13), implemented by optical conductors and/or light projectors, of the pointer instrument (14, 15) is provided in a circumferential edge region, pointing towards the display device (2), of the pointer instrument (14, 15) in order to save overall depth there in favour of a steering column connection (12).

2. Combination instrument according to Claim 1, **characterized in that** the indicating elements of the pointer instruments (14, 15) are implemented by optical conductors.

3. Combination instrument according to Claim 1, **characterized in that** the indicating elements of the pointer instruments (14, 15) are implemented by light projectors (20).

4. Combination instrument according to Claim 3, **characterized in that** the graphic symbols (25) of a cover plate (24) of the pointer instruments (14, 15) are produced by light projectors (20).

5. Combination instrument according to one of the preceding claims, **characterized in that** a light projector (20) has an LED (21) and a reflecting element (22, 23).

6. Combination instrument according to Claim 5, **characterized in that** the reflecting element comprises two reflectors (22, 23).

7. Combination instrument according to one of the preceding claims, **characterized in that** the annular edge of the pointer instruments (14, 15) is implemented by optical conductors.

8. Combination instrument according to one of the preceding claims, **characterized in that** a light source for feeding light into the optical conductors comprises LEDs.

9. Combination instrument according to at least one of Claims 5 and 8, **characterized in that** the LEDs are arranged on a printed circuit board of the pointer instruments (14, 15).

10. Combination instrument according to one of the preceding claims, **characterized in that** the two pointer instruments (14, 15) are arranged at a spacing which corresponds substantially to the diameter of the steering column.

11. Combination instrument according to one of the preceding claims, **characterized in that** given a round diameter of the steering column (10) the spacing of the pointer instruments (14, 15) is smaller than the diameter of the steering column (10), the circumferential edge region (16, 17), engaging over the steering column (10), of the pointer instruments (14, 15) being implemented by optical conductors and/or light projectors (20) in order to save overall depth there in favour of the steering column (10).

12. Combination instrument according to one of the preceding claims, **characterized in that** the optical combination device (5) is formed by a semitransparent mirror (5), the display device (2) being arranged in the direction of view of the viewer downstream of the mirror (5), and the electromechanical indicating device (4) being arranged below the mirror (5).

13. Combination instrument according to one of the preceding claims, **characterized in that** a common rotational and/or tilt adjustment device is provided for the display device (2) and the electromechanical indicating device (4).

## Revendications

1. Instrument combiné à intégrer pour un véhicule automobile, comprenant au moins un dispositif d'affichage (2) qui délivre de la lumière de représentation et qui est disposé dans le champ de vision direct d'un observateur, et au moins un dispositif indicateur (4) électromécanique éclairé et/ou auto-éclairant qui est disposé dans le champ de vision de l'observateur sous un angle donné par rapport au dispositif d'affichage (2) et qui est déplacé au-dessus d'un dispositif combiné optique (5) configuré pour réfléchir la lumière de représentation du dispositif indicateur (4) électromécanique conjointement avec le dispositif d'affichage (2) dans le champ de vision de l'observateur, le dispositif indicateur (4) électromécanique présentant au moins en partie des fibres optiques et/ou des projecteurs de lumière (20), **caractérisé en ce que** le dispositif indicateur (4) électromécanique présente deux instruments à aiguille (14, 15) disposés des deux côtés d'une colonne de direction (10), les instruments à aiguille (14, 15) sont au moins partiellement réalisés avec des fibres optiques et/ou des projecteurs de lumière et la partie (13) des instruments à aiguille (14, 15) qui est réalisée avec des fibres optiques et/ou des projecteurs de lumière est prévue dans une zone de bordure de pourtour de l'instrument à aiguille (14, 15) qui fait face vers le dispositif d'affichage (2) afin d'y gagner en profondeur d'intégration en faveur d'une liaison avec la colonne de direction (12).

2. Instrument combiné selon la revendication 1, **caractérisé en ce que** les éléments indicateurs des instruments à aiguille (14, 15) sont réalisés avec des fibres optiques.

3. Instrument combiné selon la revendication 1, **caractérisé en ce que** les éléments indicateurs des instruments à aiguille (14, 15) sont réalisés avec des projecteurs de lumière (20).

4. Instrument combiné selon la revendication 3, **caractérisé en ce que** les symboles graphiques (25) d'une plaque de protection (24) des instruments à aiguille (14, 15) sont générés avec des projecteurs de lumière (20).

5. Instrument combiné selon l'une des revendications précédentes, **caractérisé en ce qu'**un projecteur de lumière (20) présente une LED (21) et un élément réfléchissant (22, 23).

6. Instrument combiné selon la revendication 5, **caractérisé en ce que** l'élément réfléchissant comprend deux réflecteurs (22, 23).

7. Instrument combiné selon l'une des revendications précédentes, **caractérisé en ce que** le bord annulaire des instruments à aiguille (14, 15) est réalisé avec des fibres optiques.

8. Instrument combiné selon l'une des revendications précédentes, **caractérisé en ce qu'**une source de lumière destinée à injecter de la lumière dans les fibres optiques comprend des LED.

9. Instrument combiné selon au moins l'une des revendications 5 et 8, **caractérisé en ce que** les LED sont disposées sur une platine des instruments à aiguille (14, 15).

10. Instrument combiné selon l'une des revendications précédentes, **caractérisé en ce que** les deux instruments à aiguille (14, 15) sont disposés avec un écart l'un de l'autre qui correspond pour l'essentiel au diamètre de la colonne de direction.

11. Instrument combiné selon l'une des revendications précédentes, **caractérisé en ce que** dans le cas d'un diamètre rond de la colonne de direction (10), l'écart entre les instruments à aiguille (14, 15) est inférieure au diamètre de la colonne de direction (10), les zones de bordure du pourtour (16, 17) des instruments à aiguille (14, 15) qui entourent la colonne de direction (10) étant réalisées avec des fibres optiques et/ou des projecteurs de lumière (20) afin d'y gagner en profondeur d'intégration en faveur de la colonne de direction (12).

12. Instrument combiné selon l'une des revendications précédentes, **caractérisé en ce que** le dispositif combiné optique (5) est réalisé par un miroir semi-transparent, le dispositif d'affichage (2) étant disposé derrière le miroir (5) dans le sens d'observation de l'observateur et le dispositif indicateur (4) électromécanique sous le miroir (5).

13. Instrument combiné selon l'une des revendications précédentes, **caractérisé en ce qu'**un dispositif de positionnement rotatif et/ou basculant commun est prévu pour le dispositif d'affichage (2) et le dispositif indicateur (4) électromécanique.
